# EUROPEAN PATENT APPLICATION

(11) **EP 3 379 746 A1**
(43) Date of publication of application: **26.09.2018**
(21) Application number: 17161853.1
(22) Date of filing: 20.03.2017
(51) Int. Cl.: H04J 14/02

(54) **AN INTEGRATED WAVELENGTH MANAGER FOR MANAGING A PLURALITY OF WAVELENGTHS AND AN OPTICAL NODE**

(71) Applicant: Nokia Solutions and Networks Oy, 02610 Espoo (FI)
(72) Inventor: MESTRE ADROVER, Miquel Angel, 91120 Palaiseau (FR); POINTURIER, Yvan, 91620 Nozay (FR); DE VALICOURT, Guilhem, Holmdel, New Jersey 07733-1661 (US)
(74) Representative: Berthier, Karine

(57) **Abstract**

An integrated wavelength manager (SDB) for managing a plurality of wavelengths from an optical signal, said integrated wavelength manager (SDB) comprising:
- an input port (P1) for receiving the plurality of wavelengths,
- an output port (P2),
- a first optical waveguide (W1) connected to the input port (P1), and connected to the output port (P2), the plurality of wavelengths propagating along said first optical waveguide (W1),
- a second optical waveguide (W2),
- a first tunable blocker connected (C1) to the first optical waveguide (W1) and to the second optical waveguide (W2), the first tunable blocker (C1) being an opposite response tunable filter (F1; F2), said first tunable blocker (C1) being adapted:
to tune on a first selected wavelength (S1) of the plurality of wavelengths, and to extract said first selected wavelength (S1) from the first optical waveguide (W1) and to transmit said first selected wavelength (S1) on the second optical waveguide (W2), or
to let pass the plurality of wavelengths,

- the integrated wavelength manager (SDB) being adapted:
∘ to output on the output port (P2) the processed plurality of wavelengths without the first selected wavelength (S1) when said first tunable blocker (C1) is tuned on said first selected wavelength (S1),
∘ to output on the output port (P2) the processed plurality of wavelengths when the first tunable blocker (C1) lets pass said processed plurality of wavelengths.

## Description

### FIELD OF THE INVENTION

The present invention relates to optical communication network.

### BACKGROUND OF THE INVENTION

The field of communication technologies evolves rapidly to match the ever-increasing demands of content to be delivered. In order to ensure a proper end user experience, the communication networks have to convey content without much degradation and with a given latency.

Optical transport offers various practical scheme to match the requirements of the growing need of capacity. Long haul terrestrial or submarine optical networks provide communication links for huge data flow across long distances.

Optical transport is also widely in high number of users/access points use cases such as Metropolitan Area Networks or data centers. In such scenario, high capacity links are needed to transport data on short/mid ranges with low latency.

Optical networks in dense area require many access points defining several sources and destinations. An efficient way to serve these pluralities of ingress/egress nodes is to statistically multiplex wavelength on optical waveguide, i.-e. the possibility to share wavelengths by several sources and destinations. It enables an efficient use of the capacity while minimizing costly and energy-hungry opto-electronic processing.

An optical network for a dense area can be implemented as an optical slot switched rings in which several optical nodes are connected in a closed or open ring through unidirectional/bi-directional optical fibers. Each optical node comprises one or several transmitters and receivers. The transmitters and/or receives can be wavelength tunable so that they can tune on a wavelength for transmitting and/or receiving. Each node also comprises a blocker for blocking data carried on an emitted wavelength. This way, optical data that have been received at the destination node, can be blocked and freed to enable optical resources reuse by following transmitters. The blocker may also be configured to let pass a wavelength carrying data that are in transit across the current optical node. When transmitter and/or receiver are wavelength-tunable, it is required that the blocker is enabled to tune on a wavelength at least as fast as the transmitter/receiver. Another complexity residing in the blocker is that it should be compatible with a large number of wavelengths. Furthermore while being configured in blocking or passing mode, it should not impact the wavelength to be processed.

It is then needed to have a solution that complies with the various constraints inherent to a communication network, namely to be cost effective, offering an efficient cooperation between the transmitting/receiving/blocking elements in an optical node, and providing good performances.

### SUMMARY OF THE INVENTION

The invention aims to remedy all or some of the disadvantages of the above identified prior art. It particularly proposes an integrated wavelength manager enabled to manage wavelengths.

A first aspect of the invention relates then to an integrated wavelength manager for managing a plurality of wavelengths from an optical signal, said integrated wavelength manager comprising:
- an input port for receiving the plurality of wavelengths,
- an output port,
- a first optical waveguide connected to the input port, and connected to the output port, the plurality of wavelengths propagating along said first optical waveguide,
- a second optical waveguide,
- a first tunable blocker connected to the first optical waveguide and to the second optical waveguide, the first tunable blocker being an opposite response tunable filter, said first tunable blocker being adapted:
   ∘ to tune on a first selected wavelength of the plurality of wavelengths, and to extract said first selected wavelength from the first optical waveguide and to transmit said first selected wavelength on the second optical waveguide, or
   ∘ to let pass the plurality of wavelengths,
- the integrated wavelength manager being adapted:
   ∘ to output on the output port the processed plurality of wavelengths without the first selected wavelength when said first tunable blocker is tuned on said first selected wavelength,
   ∘ to output on the output port the processed plurality of wavelengths when the first tunable blocker lets pass said processed plurality of wavelengths.

Thus, thanks to these features, integrated wavelength manager is enabled to receive a plurality of wavelengths and to process it. The opposite response tunable filter allows to tune the first tunable blocker on any wavelength from the plurality of wavelengths, offering then a flexible selection of a wavelength to be managed. The first tunable blocker is advantageously operating in let pass mode or in extract mode. In let pass mode, the first tunable blocker let pass transparently the plurality of wavelengths, without deteriorating the optical signal that conveys said plurality of wavelengths. In the extract mode, a wavelength is chosen amongst the plurality of wavelengths, and is transmitted on the second optical waveguide. Said extract mode allows the remaining wavelengths (i.-e. the unselected wavelengths) to transit transparently through the first tunable blocker.

A second aspect of the invention relates then to an optical node from an optical packet switching network comprising:
- an integrated wavelength manager,
- an input port for receiving a wavelength division multiplexed optical signal, said input port being connected to the input port from the integrated wavelength manager,
- an output port connected to the output port from the integrated wavelength manager.

Thus, thanks to these features, the optical node is particularly adapted to process and manage a plurality of wavelengths.

According to various embodiments, the method and/or the optical node comprises one or more of the features below, which should be considered in any possible technical combinations:
- the integrated wavelength manager further comprises a drop port connected at an extremity of the second optical waveguide, said drop port outputting the first selected wavelength when the first tunable blocker is tuned on said first selected wavelength,
- the integrated wavelength manager further comprises an optical reflector at an extremity of the first optical waveguide, the input port being connected at another extremity of said first optical waveguide, the input port and the output port being the same port, the optical reflector reflecting the processed plurality of wavelengths, for outputting it on the output port,
- the first tunable blocker comprises a set of coupled rings optical waveguides in-between said first optical waveguide and said second optical waveguide, said set of coupled rings optical waveguides being the opposite response tunable filter,
- the first tunable blocker lets pass the plurality of wavelengths when the set of coupled rings optical waveguides is tuned on a second selected wavelength not comprised in said plurality of wavelengths, the first tunable blocker further comprising a first tuning controller for controlling the tuning of the set of coupled rings optical waveguides, said first tuning controller controlling the heat of the set of coupled rings optical waveguides for tuning said set of coupled rings optical waveguides or said first tuning controller controlling a P-N junction from the set of coupled rings optical waveguides for tuning said set of coupled rings optical waveguides,
- the first tunable blocker is further adapted:
   ∘ to tune a first subset of coupled rings optical waveguides from the set of coupled rings optical waveguides,
   ∘ to tune a second subset of coupled rings optical waveguides from the set of coupled rings optical waveguides, said second subset of coupled rings optical waveguides being different from the first subset of coupled rings optical waveguides,
   ∘ to extract said first selected wavelength from the first optical waveguide and to transmit said first selected wavelength on the second optical waveguide, when the first subset of coupled rings optical waveguides and the second subset of coupled rings optical waveguides are tuned on the first selected wavelength,
   ∘ to let pass the plurality of wavelengths when the first subset of coupled rings optical waveguides is tuned differently than the second subset of coupled rings optical waveguides,
- the first tunable blocker further comprises a first tuning controller for controlling the heat or a P-N junction of the first subset of coupled rings optical waveguides for tuning of said first subset of coupled rings optical waveguides and a second tuning controller for controlling the heat or a P-N junction of second subset of coupled rings optical waveguides for tuning of said second subset of coupled rings optical waveguides,
- the integrated wavelength manager further comprises a second tunable blocker connected to the first optical waveguide and to the second optical waveguide, said second tunable blocker being an opposite response tunable filter, said second tunable blocker being adapted:
   ∘ to tune on a fifth selected wavelength of the plurality of wavelengths, and to extract said fifth selected wavelength from the first optical waveguide and to transmit said fifth selected wavelength on the second optical waveguide, or
   ∘ to let pass the plurality of wavelengths,
   the integrated wavelength manager being adapted to:
   ∘ output on the output port the processed plurality of wavelengths without the fifth selected wavelength when the second tunable blocker is tuned on said fifth selected wavelength, and to,
   ∘ output on the output port the processed plurality of wavelengths when the second tunable blocker lets pass said processed plurality of wavelengths,
- the integrated wavelength manager further comprises:
   ∘ a demultiplexer in-between the first optical waveguide and the input port, the input port being connected to an input from the demultiplexer and the first optical waveguide being connected to an output from the demultiplexer,
- the integrated wavelength manager further comprising a multiplexer comprising an input connected to the second optical waveguide,
- the demultiplexer is a polarization mode demultiplexer and the multiplexer is a polarization mode multiplexer, the first optical waveguide and the second optical waveguide being adapted to convey a first polarization mode,
- the demultiplexer is a band demultiplexer for dividing a spectrum into sub-bands of spectrum and the multiplexer is a band multiplexer for joining sub-bands of the spectrum into the spectrum, the first optical waveguide and the second optical waveguide being adapted to convey a first set of the sub-bands of the spectrum,
- the demultiplexer is a spatial mode demultiplexer and the multiplexer is a spatial mode multiplexer, the first optical waveguide and the second optical waveguide being adapted to convey a first spatial mode,
- the first optical waveguide W1 is further connected to an input from the demultiplexer, said demultiplexer being also adapted to multiplex optical signals,
- the multiplexer is connected in-between the second optical waveguide and the drop port, another input from said multiplexer being connected to another extremity of the second optical waveguide,
- the tuning duration of the tuning of the first tunable blocker on the first selected wavelength is shorter than the duration of a time slot from an optical packet switching network.

### BRIEF DESCRIPTION OF THE FIGURES

Some embodiments of the present invention are now described, by way of example only, and with reference to the accompanying drawings, in which:
- FIG. 1 is a schematic block diagram of an optical network according to an embodiment of the invention,
- FIG. 2 is a schematic block diagram of an optical node according to an embodiment of the invention,
- FIG. 3 is a schematic block diagram of an integrated wavelength manager according to an embodiment of the invention,
- FIG. 4 is a schematic diagram of a tunable blocker according to an embodiment of the invention,
- FIG. 5 is another schematic diagram of a tunable blocker according to an embodiment of the invention,
- FIG. 6a, FIG. 6b, FIG. 6c, FIG. 6d, FIG. 6e are filtering diagrams of a tunable blocker according to an embodiment of the invention,
- FIG. 7a, FIG. 7b, FIG. 7c, FIG. 7d, FIG. 7e are other filtering diagrams of a tunable blocker according to an embodiment of the invention,
- FIG. 8 is a schematic diagram of another tunable blocker according to an embodiment of the invention,
- FIG. 9a, FIG. 9b, FIG. 9c, FIG. 9d are filtering diagrams of another tunable blocker according to an embodiment of the invention,
- FIG. 10a, FIG. 10b, FIG. 10c, FIG. 10d are other filtering diagrams of another tunable blocker according to an embodiment of the invention,
- FIG. 11 is a schematic block diagram of another integrated wavelength manager according to an embodiment of the invention,
- FIG. 12 is a schematic block diagram of another integrated wavelength manager according to an embodiment of the invention,
- FIG. 13 is a schematic block diagram of another integrated wavelength manager according to an embodiment of the invention,
- FIG. 14 is a schematic block diagram of another integrated wavelength manager according to an embodiment of the invention,
- FIG. 15 is a schematic block diagram of another integrated wavelength manager according to an embodiment of the invention,
- FIG. 16 is a schematic block diagram of another integrated wavelength manager according to an embodiment of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

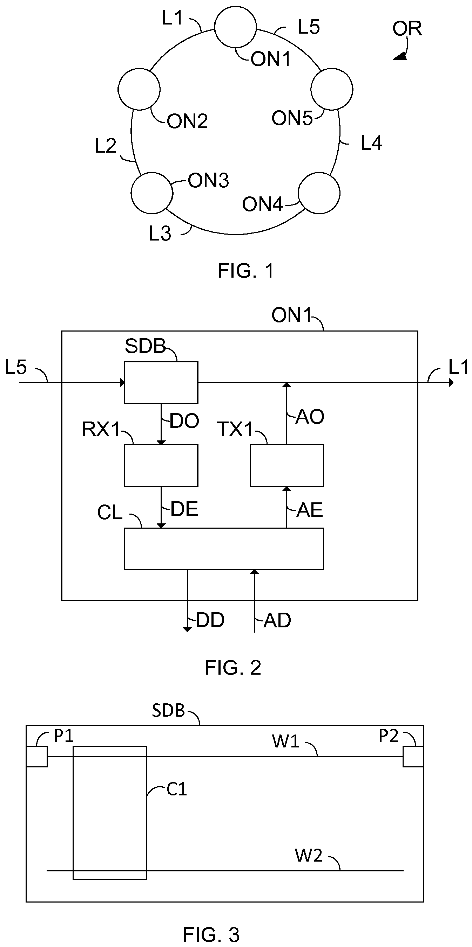

Referring to figure FIG. 1, a schematic block diagram of an optical network according to an embodiment of the invention is depicted.

In an embodiment an optical network is depicted as a schematized and simplified representation. It is depicted hereinafter as the optical ring network OR from figure FIG. 1, but it is not limited to such topology of optical network. The optical network may be for example a partial ring. In the latter, the optical ring network OR is as an optical bus network with optical links and optical nodes adapted to manage bidirectional propagation of optical links.

In an example the optical ring network OR is implemented in a datacenter (not depicted) and interconnects the servers, the storage units and the control centers of the datacenter and interconnects also the datacenter with other datacenters.

In another example the optical ring network OR is implemented in a metropolitan area network and interconnects its network elements together and interconnects said metropolitan network to other networks.

The optical ring network OR comprises:
- a first optical node ON1, and a second optical node ON2, interconnected through a first optical link L1,
- a third optical node ON3, interconnected with the second optical node ON2 through a second optical link L2,
- a fourth optical node ON4, interconnected with the third optical node ON3 through a third optical link L3,
- a fifth optical node ON5, interconnected with the fourth optical node ON4 through a fourth optical link L4, and interconnected with the first optical node ON1 through a fifth optical link L5.

The first optical link L1, the second optical link L2, the third optical link L3, the fourth optical link L4 and the fifth optical link L5 are optical waveguides adapted to convey optical signals. In an example the first optical link L1 is able to transport informative data as well as signaling and control data. In examples such optical links are optical waveguides such as optical fibers. In an example the optical fibers used for the mentioned optical links are all the same kind of fibers, but in another example, the optical fibers can be different from a segment from the optical ring network OR to another segment. In another example the optical links are multi carrier wavelengths optical fibers enabled to convey simultaneously multiple optical signals, each being carried over a dedicated carrier wavelength.

In an embodiment, an optical link such as the first optical link L1 or the fifth optical link L5 is a logical entity aggregating several multi carrier wavelengths optical fibers. In a non-limiting example, the fifth optical link L5 comprises two optical waveguides, each being enabled to convey optical signals on multiple carrier wavelengths. In yet another non-limiting example one of the two optical waveguides comprised in the optical link L5 belongs to the optical ring network OR and also to another optical ring network (not depicted in the figure FIG. 1).

In an example, in a metropolitan area network, the distance of the optical links between the neighboring optical nodes is 40 km which is covered in a duration of 0.2 millisecond with optical signals.

The first optical node ON1, the second optical node ON2, the third optical node ON3, the fourth optical node ON4 and the fifth optical node ON5 are optical nodes along the optical ring network OR and are adapted to insert and receive optical signals on said optical ring network OR. In examples such optical nodes are usually placed nearby or integrated in the network elements of the datacenter, or of the segments of the metropolitan network, for allowing them to send and receive chunks of data, that are conveyed through optical signals across the optical ring network OR.

Referring to figure **FIG. 2****,** a schematic block diagram of an optical node according to an embodiment of the invention is depicted.

Details on the first optical node ON1 are provided.

In an embodiment, the first optical node ON1 comprises:
- an integrated wavelength manager SDB connected to the fifth optical link L5 and the first optical wavelength L1,
- an optical receiver RX1 connected to the integrated wavelength manager SDB through an optical drop link DO,
- an optical transmitter TX1 connected to the first optical link L1, through an optical add link AO, the connection between the first optical link L1 and the optical add link AO being achieved through an optical combiner or coupler,
- a client layer CL, connected to the optical receiver RX1 through an electrical drop link DE, and connected to the optical transmitter RX1 through an electrical add link AE,
- the client layer CL outputting from the first optical node ON1 informative data through the data drop link DD, and receiving informative data to be transmitted by the first optical node ON1 through the data add link AD.

In an embodiment, the first optical node ON1 is adapted to transmit optical signals to be conveyed on the first optical link L1 and is also adapted to receive incoming optical signals carried over the fifth optical link L5. The first optical node ON1 can be either an endpoint for optical signals addressed to said first optical node ON1, or a start point for optical signals addressed to other optical nodes from the optical ring network OR.

In another embodiment, the first optical link L1 and the fifth optical link L5 are bi-directional optical fibers, and the first optical node ON1 is adapted to transmit and/or receive on each of these two optical fibers.

In an embodiment, the integrated wavelength manager SDB processes an incoming optical signal through the fifth optical link L5.

The integrated wavelength manager SDB can be configured to transparently let pass the received optical signal and to forward it to the first optical link L1. It is meant by transparently let pass, that the integrated wavelength manager SDB does not modify the content of the optical signal as it goes thru, applies no or minor attenuation on the particulars of the optical signal, and induces no or minor delay in the propagation of the optical signal.

The integrated wavelength manager SDB can also be configured to block at least a specific wavelength comprised in the plurality of wavelengths that composes the optical signal. In such case, the specific wavelength is blocked by the integrated wavelength manager SDB and is optionally dropped which means it is forwarded through the optical drop link DO to the optical receiver RX1, whereas the remaining wavelengths from the optical signal are transparently passing through the integrated wavelength manager SDB to the first optical link L1.

In another embodiment the integrated wavelength manager SDB is adapted to be configured for blocking more than one specific wavelength.

In an example the integrated wavelength manager SDB is adapted to process a plurality of wavelengths that composes a Wavelength Division Multiplexing (WDM) optical signal. For example the plurality of wavelengths spans over the C-band (1530 nm-1565 nm). In another example the plurality of wavelengths is comprised in the L-band (1565 nm-1625 nm).

The optical receiver RX1 is adapted to process incoming optical signals provided by the integrated wavelength manager SDB through the optical drop link DO, in order to extract the useful data that are targeted to reach the first optical node ON1. In an example the optical receiver RX1 may comprise an Optical to electrical (O/E) conversion module and a Digital Signal Processing (DSP) module for processing the converted optical signal into the electrical domain. For example the DSP module may perform the following tasks:
- chromatic dispersion compensation function,
- polarization demultiplexing and equalization functions,
- carrier frequency estimation function,
- carrier phase estimation function,
- samples decision function,
- samples demapper and Forward Error Correction functions.

In an example, the DSP module is a digital signal processor adapted to perform signal processing operations. In another example the DSP module is the combination of a General Purpose Processor (GPP) with a dedicated computing unit such as a Field Programmable Gate Array (FPGA).

In an embodiment, the optical receiver RX1 is tuned to a fixed wavelength. It means that the optical receiver RX1 is configured at setup on a specific wavelength, to be chosen according to system engineering rules. Such optical receiver RX1 has the advantage of being reliable and cost-effective.

In another embodiment, the optical receiver RX1 is a fast-tunable receiver. It means that the optical receiver RX1 is adapted to tune on a wavelength in a short duration of time. For example, in an optical slot switching network, the optical receiver RX1 may be able to tune on a different wavelength on a time-slot basis. In another example, the optical receiver RX1 may take a few time-slots to tune on a different wavelength. Such optical receiver RX1 offers more flexibility in the optical network.

The client layer CL is provided with extracted data from the optical signals by the optical receiver RX1, and is in charge to further forward said extracted data to the recipient or to other intermediate nodes from a communication network interconnected with the optical ring network OR.

The client layer CL is also provided by external entities to the first optical node ON1 with data to be transported through the optical ring network OR. These data incomes to the client layer CL through the data add link AD. The client layer CL processes said data, by for example building frames or performing segmentation or buffering them, and then provides them to the optical transmitter TX1, through the electrical data link.

The optical transmitter TX1 processes the data sent by the client layer CL. The received data are formatted through signal processing functions and are converted from the electrical domain to the optical domain into optical packets. Further signal processing is also applied in order to appropriately shape the optical data packets into an optical signal.

In an embodiment, the optical transmitter TX1 is a fast-tunable optical transmitter. A fast-tunable transmitter is enabled to tune of a carrier wavelength in a shorter time than the duration of an optical time slot. Advantageously the optical transmitter TX1 is able to switch from a carrier wavelength to another at each time slot, making it possible to send optical packets to a different destination optical node at each time slot.

The optical receiver RX1 outputs the optical signal on the optical add link AO. Said optical add link AO is coupled with the first optical link so that the optical signal emitted by the optical transmitter TX1 transits trough the optical add link AO, and then exits the first optical node ON1 through the first optical link L1.

Referring to figure FIG. **3****,** a schematic block diagram of an integrated wavelength manager according to an embodiment of the invention is depicted.

In an embodiment the integrated wavelength manager SDB comprises an input port P1, an output port P2, a first optical waveguide W1 connected to the input port P1 and at the output port P2, a second optical waveguide W2, and a first tunable blocker C1 connected to the first optical waveguide W1 and to the second optical waveguide W2.

The optical signal, received through the fifth optical link L5 is entering the integrated wavelength manager SDB through the input port P1. The optical signal, which comprises a plurality of wavelengths, propagates along the first optical waveguide W1.

The optical signal reaches the first tunable blocker C1 which is connected to the first optical waveguide W1. The first tunable blocker C1 processes the optical signal:
- either the first tunable blocker C1 lets pass the plurality of wavelengths so that they further propagate on the first optical waveguide W1,
- or the first tunable blocker C1 extracts a specific wavelength from the plurality of wavelengths, the specific wavelength being then forwarded to the second optical waveguide W2, whereas the plurality of wavelengths without said specific wavelength continues to propagate on the first optical waveguide W1.

After being processed by the first tunable blocker C1, the plurality of wavelengths, with or without the specific wavelength depending on the configuration of said first tunable blocker C1, further propagates on the first optical waveguide W1. In an embodiment, the plurality of wavelengths with or without the specific wavelength reaches the output port P2 and exits the integrated wavelength manager SDB. In another embodiment, the plurality of wavelengths with or without the specific wavelength reaches another tunable blocker (not depicted on figure FIG. 3) which processes then received wavelengths, in a similar manner as the first tunable blocker C1.

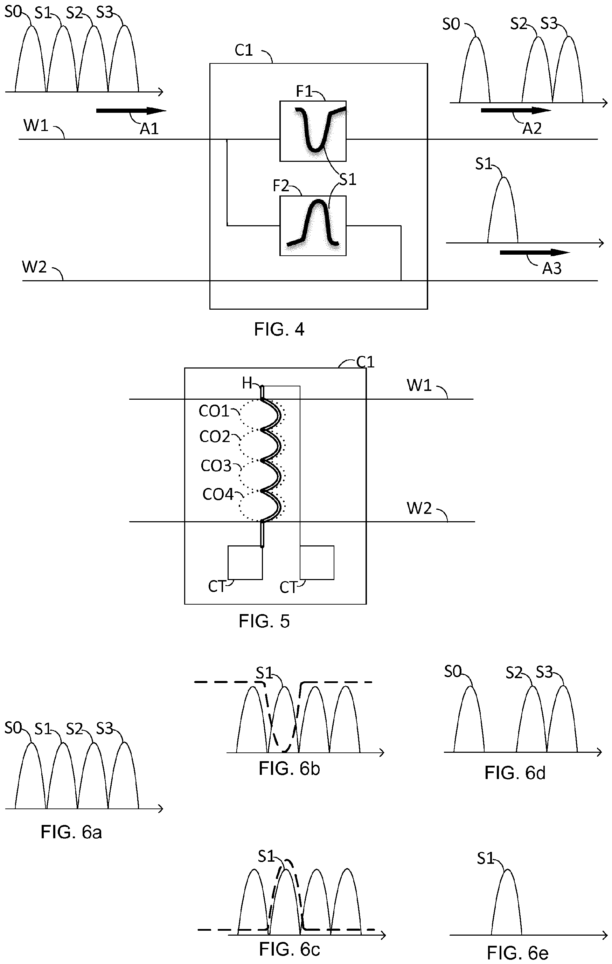

Referring to figure FIG. **4****,** a schematic diagram of a tunable blocker according to an embodiment of the invention is depicted.

In an embodiment, the first tunable blocker C1 is an opposite response tunable filter. An opposite response tunable filter is a filter adapted to operate on selected frequency(ies). On one hand the opposite response tunable filter processes an input signal as it filters the selected frequency(ies) from said input optical signal, and on the other hand said selected frequency(ies) is outputted. So when the opposite response tunable filter is tuned on the selected frequency(ies), one of its output serves as a band-stop output, and another of its output serves as band-pass output.

Details of the functioning of the opposite response tunable filter are provided. The first tunable blocker C1 is connected to the first optical waveguide W1 and the second optical waveguide W2. The first tunable blocker C1 comprises a first filtering block F1, and a second filtering block F2. The second filtering block F2 is adapted to mirror the frequency response of the first filtering block F1. The first filtering block F1 and the second filtering block F2 can be tuned on the same selected frequency or can be tuned each on different frequencies.

The arrow A1 depicts the arrival of an optical signal comprising a plurality of wavelengths, each wavelength being at the respective central frequency S0, S1, S2, S3. The optical signal from arrow A1 propagates on the first optical waveguide W1 and reaches the first tunable blocker C1. Said first tunable blocker C1 is tuned on the selected frequency S1. It means that the first filtering block F1 and the second filtering block F2 are both tuned on the selected frequency S1. The first filtering block F1 filters the plurality of wavelength to suppress the wavelength at central frequency S1. The resulting optical signal propagates further on the first optical waveguide W1 as depicted by arrow A2, and has a spectrum comprising wavelengths at central frequencies S0, S2 and S3. The second filtering block F2 filters all frequencies except the frequency S1. The resulting optical signal propagates on the second optical waveguide W2 as depicted by arrow A3, and has a spectrum comprising the selected frequency S1.

As depicted by figure FIG. 4, the tunable blocker C1 operates as an opposite response tunable filter. The tunable blocker C1, when tuned on a selected wavelength, extracts said selected wavelength from the input signal, and transmits the input signal without said selected wavelength on the first optical waveguide W1, and also transmits the selected wavelength on the second optical waveguide W2.

The first tunable blocker C1 is also configurable to let pass the input signal. For that purpose, in an embodiment, the first tunable blocker is tuned on a selected wavelength that is not comprised in the plurality of wavelengths, so the plurality wavelengths passes through the first tunable blocker C1 without being filtered. In another embodiment, the first tunable blocker C1 is tuned on two different selected wavelengths so that the plurality of wavelengths is not filtered on one of the two wavelengths as the filtering responses compensate themselves. In these two kinds of configuration the first tunable blocker C1 operates transparently on the input signal to be processed.

Referring to figure FIG. **5****,** another schematic diagram of a tunable blocker according to an embodiment of the invention is depicted.

In an embodiment, the first tunable blocker C1 comprises a set of coupled optical rings waveguides (CROW) CO1, CO2, CO3 and CO4, said set performing the function of the opposite response tunable filter.

In order to ease the understanding of the diagram, only four coupled optical rings waveguides are depicted but the first tunable blocker C1 may comprise less or even more than four.

The set of CROW comprises series of rings connecting the first and second optical waveguides W1 and W2. For this application the set of CROW needs to have only a resonant wavelength along the spectrum occupied by all channels. Such resonance can be tuned towards any wavelength in {λ₁, λ₂, ..., λ_{N}} of the plurality of wavelengths of the input optical signal, to be able to process any channel/wavelength.

The frequency tuning of the set of CROW can be performed thermally by a heater H leading to tuning speeds between 1 and 15 microseconds or using a P-N junction using carrier depletion effect (not shown) for faster tuning times below 10ns, which fulfills typical OSS requirements.

All rings in the set of CROW will be tuned the same way using a single controller (a pad CT for applying the heating voltage and another pad CT for the ground belong to the single controller) for controlling the heater H or a P-N junction. This way, the set of CROW will be tuned towards the wavelength under interest when configured in the "extract"/"drop" mode, or outside of the whole band when configured in the "pass" mode.

Referring to figures FIG. **6a**, FIG. **6b**, FIG. **6c**, FIG. **6d**, FIG. **6e**, filtering diagrams of a tunable blocker according to an embodiment of the invention are depicted.

In figure FIG. 6a, the optical signal comprising a plurality of wavelengths S0, S1, S2, S3 is received to be processed by the first tunable blocker C1 from figure FIG. 5. The set of CROW from the first tunable blocker C1 is tuned on the selected wavelength S1.

In figure FIG. 6b, the selected wavelength S1 is isolated for being filtered by the filtering response of the set of CROW.

In figure FIG. 6c, the selected wavelength S1 is isolated for being let pass by the opposite filtering response of the set of CROW.

In figure FIG 6.d, the plurality of wavelengths without the selected wavelength S1 is outputted for being transmitted on the first optical waveguide W1.

In figure FIG. 6e, the selected wavelength S1 and not the other wavelengths is outputted for being transmitted on the second optical waveguide W2.

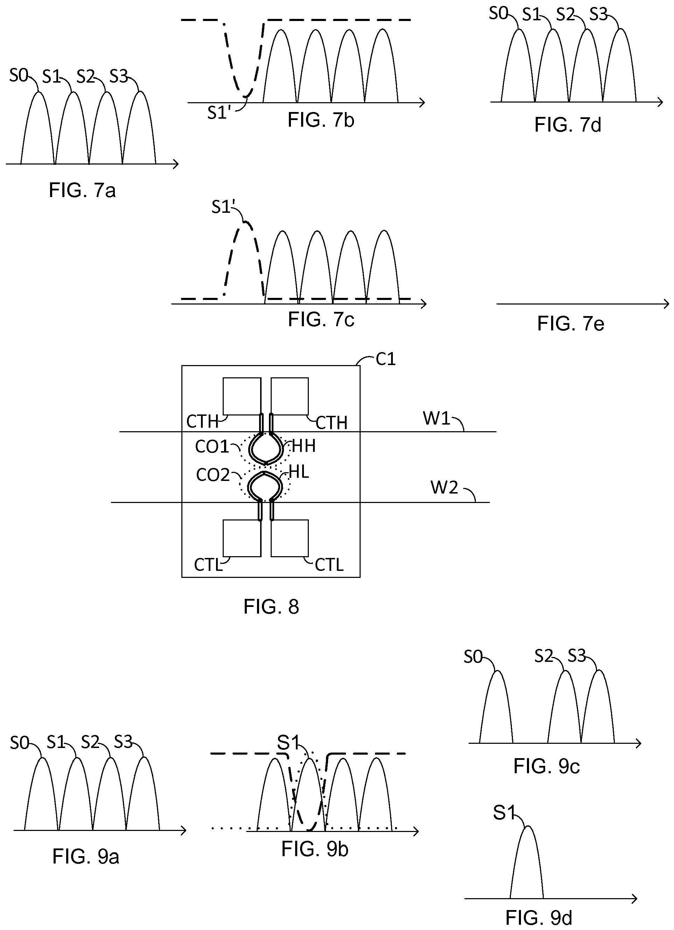

Referring to figures FIG. **7a,** FIG. **7b**, FIG. **7c**, FIG. **7d**, FIG. **7e**, filtering diagrams of a tunable blocker according to an embodiment of the invention are depicted.

In figure FIG. 7a, the optical signal comprising a plurality of wavelengths S0, S1, S2, S3 is received to be processed by the first tunable blocker C1 from figure FIG. 5. The set of CROW from the first tunable blocker C1 is tuned on the selected wavelength S1' which is not comprised in the plurality of wavelengths S0, S1, S2, S3.

In figure FIG. 7b, the selected wavelength S1' is isolated for being filtered by the filtering response of the set of CROW.

In figure FIG. 7c, the selected wavelength S1' is isolated for being let pass by the opposite filtering response of the set of CROW.

In figure FIG 7.d, the plurality of wavelengths is outputted for being transmitted on the first optical waveguide W1.

In figure FIG. 7e, no wavelength is outputted for being transmitted on the second optical waveguide W2.

Referring to figure FIG. **8****,** a schematic diagram of another tunable blocker according to an embodiment of the invention is depicted.

In an embodiment, the first tunable blocker C1 comprises a set of coupled optical rings waveguides (CROW) CO1, CO2, said set performing the function of the opposite response tunable filter. In order to ease the understanding of the diagram, only two coupled optical rings waveguides are depicted but the first tunable blocker C1 may comprise more than two.

The set of CROW comprises a first subset of CROW comprising the coupled optical ring waveguide C01, and a second subset of CROW comprising the coupled optical ring waveguide CO2.

A heater HH controls the heating of the first subset of CROW in order to tune said first subset on a specific wavelength. The heater HH is controlled by the controller CTH. In an example said controller CTH comprises two connectors as depicted in figure FIG. 5, one connector for inputting the control signal, and the other one for outputting said control signal.

A heater HL controls the heating of the second subset of CROW in order to tune said second subset on another specific wavelength. The heater HL is controlled by the controller CTL. Such controller CTL may also comprises two connectors.

In another embodiment, each of the subsets of CROW is controlled by a P-N junction which provides wavelength tuning time compatible with optical slot switching network design.

In this embodiment, the extract/drop mode as mentioned previously is achieved by tuning both subset of rings (the whole set of CROW) towards the specific wavelength of interest. However, in the pass mode, it is not necessary to tune the subset outside of the band or the plurality of wavelengths. Applying a slightly different tuning wavelength to each subset of CROW induces an almost flat response to the whole spectrum.

Referring to figures FIG. **9a**, FIG. **9b**, FIG. **9c**, FIG. **9d**, filtering diagrams of another tunable blocker according to an embodiment of the invention are depicted.

In figure FIG. 9a, the optical signal comprising a plurality of wavelengths S0, S1, S2, S3 is received to be processed by the first tunable blocker C1 from figure FIG. 8. The first subset of CROW from the first tunable blocker C1 is tuned on the selected wavelength S1. The second subset of CROW is also tuned on the selected wavelength S1.

In figure FIG. 9b, the selected wavelength S1 is isolated for being filtered by the filtering response (depicted in dash line) of the first subset of CROW. Said selected wavelength S1 is also isolated for being let pass by the opposite filtering response (depicted in dotted line) of the second subset of CROW.

In figure FIG 9.c, the plurality of wavelengths without the selected wavelength S1 is outputted for being transmitted on the first optical waveguide W1.

In figure FIG. 9d, the selected wavelength S1 and not the other wavelengths is outputted for being transmitted on the second optical waveguide W2.

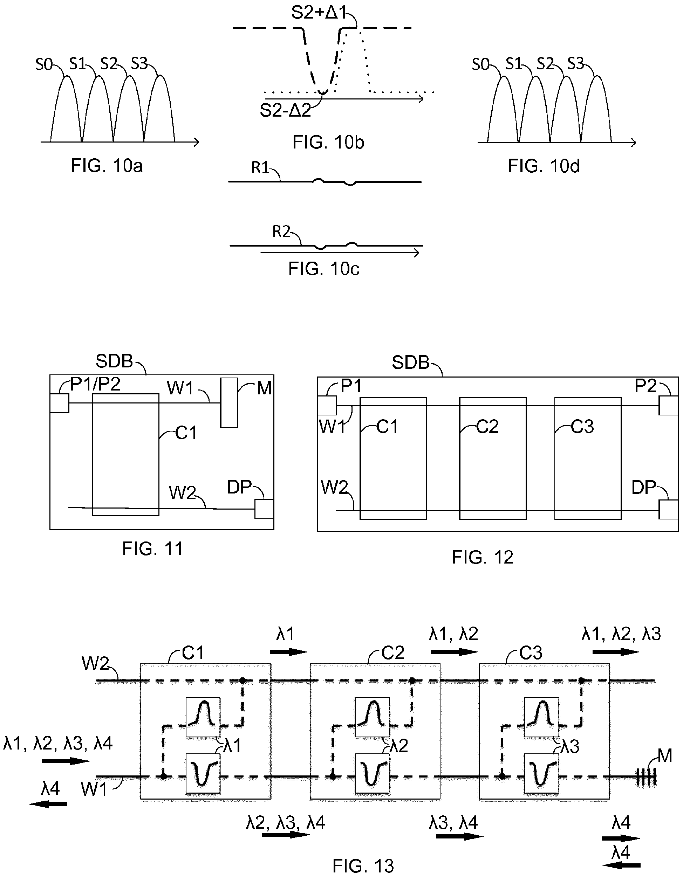

Referring to figures FIG. **10a,** FIG. **10b**, FIG. **10c**, FIG. **10d**, other filtering diagrams of another tunable blocker according to an embodiment of the invention are depicted.

In figure FIG. 10a, the optical signal comprising a plurality of wavelengths S0, S1, S2, S3 is received to be processed by the first tunable blocker C1 from figure FIG. 8. The first subset of CROW from the first tunable blocker C1 is tuned on the selected wavelength S2. The second subset of CROW is also tuned on the selected wavelength S3.

In figure FIG. 10b, the two subsets of CROW are slightly detuned by 2Δ = Δ1 + Δ2 around the selected wavelength S2. The selected wavelength S2+Δ1 is isolated for being filtered by the filtering response (depicted in dash line) of the first subset of CROW. The other selected wavelength S2-Δ2 is also isolated for being let pass by the opposite filtering response (depicted in dotted line) of the second subset of CROW.

In an example, the values of the respective detuning Δ1 and Δ2 is less than the spacing between the two consecutives wavelengths S1 and S2.

In an example, it is possible to configure the detuning such as Δ = Δ1 = Δ2.

In figure FIG. 10c, the cumulated filter responses of the first subset of CROW and the second subset of CROW are depicted. The almost flat filtering response R1 represents the cumulated filtering response as seen from the first optical waveguide W1 and is a band-pass response. The almost flat filtering response R2 represents the cumulated filtering response as seen from the second optical waveguide W2 and is a band-stop response.

In figure FIG. 10d, the first tunable blocker C1 lets pass the plurality of wavelengths on the first optical waveguide W1.

Referring to figure FIG. **11**, a schematic block diagram of another integrated wavelength manager according to an embodiment of the invention is depicted.

In an embodiment, the integrated wavelength manager SDB comprises an optical reflector M at an extremity of the first optical waveguide W1 and after the output of the first tunable blocker C1. The other extremity of the first optical waveguide W1 is connected to the input port P1 and also to the output port P2. Indeed the input port P1 and the output port P2 are the same ports. In an example the optical reflector M is a mirror. In another example the optical reflector M reflects optical signals through Bragg gratings. In yet another example the optical reflector M is implemented with Signac loops. In yet another example, when the integrated wavelength manager SDB is implemented in a chip, the optical reflector M is achieved through the interface of the silicon from the chip and the air, which creates a reflective surface.

The plurality of wavelengths is received by the input port P1 and propagates along the first optical waveguide W1. The first tunable blocker C1 processes the plurality of wavelengths and outputs either the whole spectrum, or the plurality of wavelengths without the selected wavelength, depending if the first tunable blocker C1 is configured in the pass mode or in the extract/drop mode. The first tunable blocker C1 outputs the processed plurality of wavelengths which propagates further on the first optical waveguide. The processed plurality of wavelengths reaches the optical reflector M and is then reflected in the opposite direction.

The reflected and processed plurality of wavelengths propagates back on the first optical waveguide W1. The reflected and processed plurality of wavelengths reaches the first tunable blocker C1. Said first tunable blocker C1 may be still configured as previously in the pass mode or in the extract/drop mode. In the pass mode, the reflected and processed plurality of wavelengths goes transparently through the first tunable blocker C1. In the extract/drop, the first tunable blocker C1 may still be configured on the selected wavelength that was previously extracted from the plurality of wavelength during its first transit through the first tunable blocker C1. In such case, since said selected wavelength is no more present in the reflected and processed plurality of wavelengths, the first tunable blocker C1 lets transparently pass said reflected and processed plurality of wavelengths. In another case, the first tunable blocker C1 may be tuned on a different selected wavelength, and operates as explained herein above.

In an embodiment, the integrated wavelength manager SDB comprises a drop port DP. Said drop port DP is connected to the second optical waveguide W2.

When the first tunable blocker C1 is in the extract/drop mode, it outputs on the second optical waveguide W2 the selected wavelength on which it is tuned. Said selected wavelength W2 propagates along the second optical waveguide W2, up to the drop port DP. The selected wavelength is then outputted by the integrated wavelength manager SDB through this drop port DP. In an example the drop port DP is further connected to another optical waveguide for transmitting the selected wavelength to another optical node belonging to another optical network. In another example the drop port DP is further connected to an optical receiver that processes the selected wavelength through an optical to electrical conversion in order to extract the useful informative data.

Referring to figure FIG. **12****,** a schematic block diagram of another integrated wavelength manager according to an embodiment of the invention is depicted.

The integrated wavelength manager SDB comprises the input port P1 and the output port P2, respectively located at the extremities of the first optical waveguide W1. The integrated wavelength manager SDB further comprises the drop port DP at an extremity of the second optical waveguide W2.

The integrated wavelength manager SDB further comprises the first tunable blocker C1, a second tunable blocker C2 and a third tunable blocker C3, each of the tunable blocker being tunable on a selected wavelength for extracting/dropping or letting pass said selected wavelength.

As the three tunable blockers are cascaded, the integrated wavelength manager SDB is advantageously enabled process up to three different selected wavelengths to be extracted/dropped. Of course each of the three tunable blockers may be configured independently in the pass mode or in the extract/drop mode. In another example the integrated wavelength manager comprises more than three cascaded tunable blockers.

Referring to figure FIG. **13****,** a schematic block diagram of another integrated wavelength manager according to an embodiment of the invention is depicted.

In an embodiment, the integrated wavelength manager SDB comprises:
- the first optical waveguide W1 at the bottom of the figure (the input and output ports are not schematized), and connected to the optical reflector M,
- the second optical waveguide W2 at the top of the figure (the drop port is not represented in figure FIG. 13),
- the first tunable blocker C1, connected between the first optical waveguide W1 and the second optical waveguide W2,
- the second tunable blocker C2, connected between the first optical waveguide W1 and the second optical waveguide W2,
- the third tunable blocker C3, connected between the first optical waveguide W1 and the second optical waveguide W2,
- the first tunable blocker C1, the second tunable blocker C2 and the third tunable blocker C3 being cascaded, the optical mirror M being connected to an output from the third tunable blocker C3 through the first optical waveguide W1.

In an example of an operational mode, the integrated wavelength manager SDB receives an input optical signal that comprises the plurality of wavelengths λ1, λ2, λ3, λ4.

The first tunable blocker C1 is tuned on the selected wavelength λ1, the second tunable blocker C2 is tuned on the selected wavelength λ2 and the third tunable blocker C3 is tuned on the selected wavelength λ3. In such case the three tunable blockers are configured in the extract/drop mode.

The first tunable blocker C1 receives the plurality of wavelengths λ1, λ2, λ3, λ4 through the first optical waveguide W1. As the first tunable blocker C1 is tuned on the selected wavelength λ1, said selected wavelength λ1 is extracted from the plurality of wavelengths and transmitted on the second optical waveguide W2. At the outputs of the first tunable blocker C1, the selected wavelength λ1 propagates on the second optical waveguide W2, and the plurality of wavelengths λ2, λ3, λ4 propagates on the first optical waveguide W1.

The second tunable blocker C2 receives the plurality of wavelengths λ2, λ3, λ4 through the first optical waveguide W1 and the extracted wavelength λ1 through the second optical waveguide W2. As the second tunable blocker C2 is tuned on the selected wavelength λ2, said selected wavelength λ2 is extracted from the plurality of wavelengths and transmitted on the second optical waveguide W2. At the outputs of the second tunable blocker C2, the selected wavelength λ2 and the extracted wavelength λ1 are combined and propagate on the second optical waveguide W2, and the plurality of wavelengths λ3, λ4 propagates on the first optical waveguide W1. In an example the combination of wavelengths is performed with an optical coupler.

The third tunable blocker C3 receives the plurality of wavelengths λ3, λ4 through the first optical waveguide W1 and the extracted plurality of wavelengths λ1, λ2 through the second optical waveguide W2. As the third tunable blocker C3 is tuned on the selected wavelength λ3, said selected wavelength λ3 is extracted from the plurality of wavelengths and transmitted on the second optical waveguide W2. At the outputs of the third tunable blocker C3, the selected wavelength λ3 and the extracted plurality of wavelengths λ1, λ2 are combined and propagate on the second optical waveguide W2, and the remaining wavelength λ4 propagates on the first optical waveguide W1.

The remaining wavelength λ4 reaches the optical reflector M and is reflected for propagating in the reverse direction on the first optical waveguide W1. The remaining wavelength λ4 goes transparently through the tunable blockers up to the output port of the integrated wavelength manager SDB.

The extracted plurality of wavelength λ1, λ2, λ3 propagates on the second optical waveguide W2 up to the drop port of the integrated wavelength manager SDB.

Other configurations of the tunable blockers are of course possible.

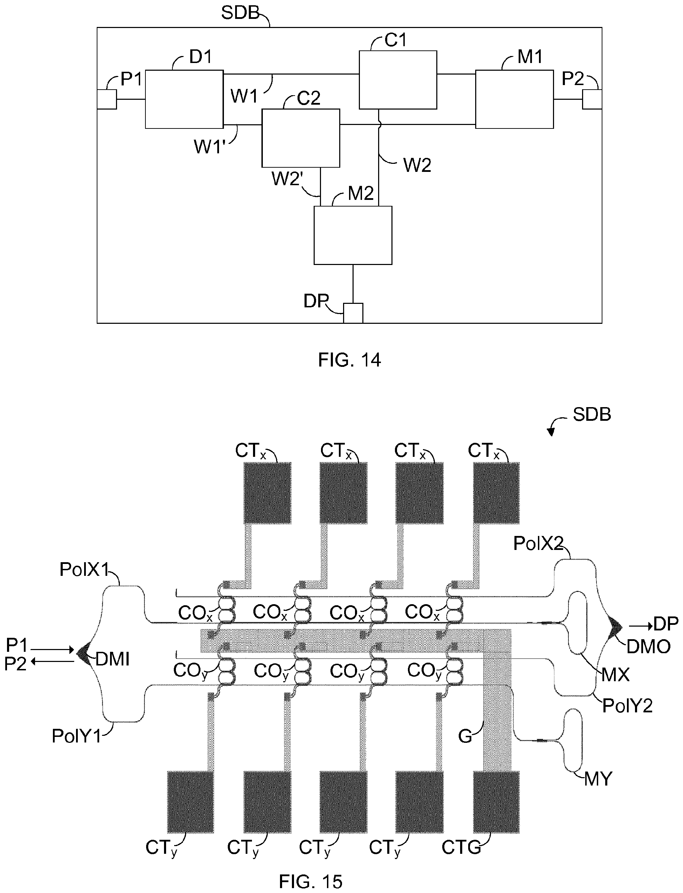

Referring to figure FIG. **14****,** a schematic block diagram of another integrated wavelength manager according to an embodiment of the invention is depicted.

In an embodiment, the integrated wavelength manager SDB comprises a first tunable blocker C1 and a second tunable blocker C2. Both tunable blockers C1 and C2 are structurally and functionally similar to those presented herein above, but their arrangements within the integrated wavelength manager SDB are different.

The integrated wavelength manager SDB further comprises a demultiplexer D1, a first multiplexer M1 and a second multiplexer M2.

In the present embodiment the integrated wavelength manager SDB also comprises the input port P1, the output port P2, different from the input port P1 and the drop port DP. In other embodiments, other configurations of the ports P1, P2 and DP are possible, and optionally a reflector may be comprised in the integrated wavelength manager SDB. For example, the integrated wavelength manager SDB may be adapted to only block selected wavelengths, in which case the drop port is not required.

The input from demultiplexer D1 is connected to the input port P1 for receiving the plurality of wavelengths.

An output of the demultiplexer D1 is connected to the first optical waveguide W1. As depicted previously, the first tunable blocker C1 is connected to the first optical waveguide W1 and to the second optical waveguide W2. The first optical waveguide W1 is connected to an input from the first multiplexer M1.

Another output of the demultiplexer D1 is connected to another first optical waveguide W1'. The second tunable blocker C2 is connected to said other first optical waveguide W1' and to another second optical waveguide W2'. The other first optical waveguide W1' is connected to another input from the first multiplexer M1.

An output of the first multiplexer M1 is connected to the output port P2.

The second optical waveguide W2 and the other second optical waveguide W2' are connected respectively to inputs of the second multiplexer M2. An output of the second multiplexer M2 is connected to the drop port DP.

The demultiplexer D1 receives the plurality of wavelengths from the input port P1. The plurality of wavelengths is processed and demultiplexed by the demultiplexer D1, and the resulting first signal and second signal are conveyed respectively on the first optical waveguide W1 and the other first optical guide W1'.

The first signal reaches then the first tunable blocker C1, whereas the second signal reaches the second tunable blocker C2.

When the first tunable blocker C1 is tuned on a selected wavelength, said first tunable blocker C1 outputs on the first optical waveguide W1 the processed plurality of wavelengths from the first signal without said selected wavelength, and transmits on the second optical waveguide W2 said selected wavelength. When the first tunable blocker C1 is configured as a band-pass filter, it outputs on the first optical waveguide W1 the plurality of wavelengths from the first signal without modifying it.

When the second tunable blocker C2 is tuned on another selected wavelength, said second tunable blocker C2 outputs on the other first optical waveguide W1' the processed plurality of wavelengths from the second signal without said other selected wavelength, and transmits on the other second optical waveguide W2' said other selected wavelength. When the second tunable blocker C2 is configured as a band-pass filter, it outputs on the other first optical waveguide W1' the plurality of wavelengths from the second signal without modifying it.

In an example the first tunable blocker C1 and the second tunable blocker C2 are tuned on the same wavelength, which is advantageous to extract said wavelength in case the demultiplexer D1 is a polarization demultiplexer.

In another example the first tunable blocker C1 and the second tunable blocker C2 are tuned on different wavelengths, which is advantageous to extract different wavelengths in case the demultiplexer D1 is a band demultiplexer.

The first signal processed by the first tunable blocker C1 propagates on the first optical waveguide W1, up to the first multiplexer M1. Similarly the second signal processed by the second tunable blocker C2 propagates on the other first optical waveguide W1', up to the first multiplexer M1. Said first multiplexer M1 combines the processed first signal and second signal into an output signal which is further outputted by the first multiplexer M1 and then provided to the output port P2 for exiting the integrated wavelength manager SDB.

When the first tunable blocker C1 is configured in the drop mode for extracting the selected wavelength, it transmits on the second optical waveguide W2 said selected wavelength. The selected wavelength propagates on said second optical waveguide W2 up to the second multiplexer M2.

When the second tunable blocker C2 is configured in the drop mode for extracting the other selected wavelength, it transmits on the other second optical waveguide W2' said other selected wavelength. The other selected wavelength propagates on said other second optical waveguide W2' up to the second multiplexer M2.

The second multiplexer M2 receives on its inputs the selected wavelength and the other selected wavelength, and multiplexes them into a drop signal which is outputted to propagate up to the drop port DP. The selected wavelength and the other selected wavelength can exit the integrated wavelength manager SDB in order to be further processed, for example to further be transmitted to another optical node or to be converted into the electrical domain.

Advantageously the integrated wavelength manager SDB is arranged to demultiplex the plurality of wavelengths received on the input port P1, drop one or two specific wavelengths from said plurality through the drop port DP, and multiplex before outputting the plurality without said one or two specific wavelengths on the output port P2. Thanks to the demultiplexing and multiplexing capabilities, the integrated wavelength managed SDB allows to process a particular component from the plurality of wavelengths. The integrated wavelength manager SDB is also advantageously arranged to transparently let pass the plurality of wavelengths.

In an embodiment, the demultiplexer D1 is a polarization mode demultiplexer and the first multiplexer M1 and second multiplexer M2 are polarization mode multiplexers. The first optical waveguide W1 and the second optical waveguide W2 are adapted to convey a first polarization mode/component demultiplexed from the plurality of wavelengths. The other first optical waveguide W1' and the other second optical waveguide W2' are adapted to convey a second polarization mode/component demultiplexed from the plurality of wavelengths.

In another embodiment, the demultiplexer D1 is a band demultiplexer for dividing a spectrum into sub-bands of spectrum and the first multiplexer M1 and the second multiplexer M2 are band multiplexers for joining sub-bands of the spectrum into the spectrum. The first optical waveguide W1 and the second optical waveguide W2 are adapted to convey a first set of the sub-bands of the spectrum. The other first optical waveguide W1' and the other second optical waveguide W2' are adapted to convey a second set of the sub-bands of the spectrum.

In another embodiment, the demultiplexer D1 is a wavelengths demultiplexer for demultiplexing a spectrum into wavelengths and first multiplexer M1 and the multiplexer M2 are wavelengths multiplexers for joining wavelengths into the spectrum. The first optical waveguide W1 and the second optical waveguide W2 are adapted to convey wavelengths of the spectrum. The other first optical waveguide W1' and the other second optical waveguide W2' are adapted to convey other wavelengths of the spectrum.

In another embodiment, the demultiplexer (D1) is a spatial mode demultiplexer and the first multiplexer M1 and second multiplexer M2 are spatial mode multiplexers. The first optical waveguide W1 and the second waveguide W2 are adapted to convey a first spatial mode. The other first optical waveguide W1' and the other second waveguide W2' are adapted to convey a second spatial mode.

Referring to figure FIG. **15****,** a schematic block diagram of another integrated wavelength manager according to an embodiment of the invention is depicted.

In an embodiment, the integrated wavelength manager SDB comprises:
- the input port P1 and the output port P2 which are the same port,
- an input demultiplexer/multiplexer DMI (corresponding to the first multiplexer M1 and demultiplexer D1 from figure FIG. 14) connected to the input port P1/output port P2, said input demultiplexer/multiplexer DMI being a polarization mode demultiplexer/multiplexer enabled to demultiplex a plurality of wavelengths into a first polarization component and a second polarization component, and to multiplex a first polarization component and a second polarization component into a plurality of wavelengths,
- a polarization waveguide PolX1 connected to an output from the input demultiplexer/multiplexer DMI for carrying the first polarization and corresponding to the first optical waveguide W1 from figure FIG. 14,
- a polarization waveguide PolY1 connected to another output from the input demultiplexer/multiplexer DMI for carrying the second polarization and corresponding to the other first optical waveguide W1' from figure FIG. 14,
- a reflector MX for the first polarization connected to the polarization waveguide PolX1 for reflecting optical signals,
- a reflector MY for the second polarization connected to the polarization waveguide PolY1 for reflecting optical signals,
- a plurality of sets of coupled optical rings waveguides COₓ connected to the polarization waveguide PolX1 and to a polarization waveguide PolX2, corresponding to the second optical waveguide W2 from figure FIG. 14,
- a plurality of sets of coupled optical rings waveguides CO_{y} connected to the polarization waveguide PolY1 and to a polarization waveguide PolY2, corresponding to the other second optical waveguide W2' from figure FIG. 14,
- a set of controllers CTₓ, for controlling the tuning of the plurality of set of coupled optical rings waveguides COₓ, each controller CTₓ controlling a set of coupled optical rings waveguide COₓ,
- a set of controllers CT_{y}, for controlling the tuning of the plurality of set of coupled optical rings waveguides CO_{y}, each controller CT_{y} controlling a set of coupled optical rings waveguide CO_{y},
- the sets of controllers CTₓ and CT_{y} being associated to a common ground G connected to a controller CTG,
- a drop demultiplexer/multiplexer DMO (corresponding to the second multiplexer M2 from figure FIG. 14) comprising an output connected to the drop port DP and comprising an input connected to the polarization waveguide PolX2 (W2 from figure FIG. 14) and another input connected to the polarization waveguide PolY2 (W2' from figure FIG. 14), the output demultiplexer/multiplexer DMO being a polarization demultiplexer/multiplexer enabled to multiplex a first polarization component and a second polarization component into a plurality of wavelengths to be outputted on the drop port DP, and to demultiplex a plurality of wavelengths into a first polarization component and a second polarization component.

The input port P1 receives a plurality of wavelengths that comprises the first polarization component and the second polarization component.

The plurality of wavelengths is demultiplexed into its first polarization component and into its second polarization component.

The first polarization component propagates on the polarization waveguide PolX1 through the plurality of set of coupled optical rings waveguides COₓ, which are adapted to be tuned on specific wavelengths for extracting those specific wavelengths and forwarding them on the polarization waveguide PolX2 or to let pass the first polarization component. The tuning on the specific wavelengths of the plurality of set of coupled optical rings waveguides COₓ is achieved individually by each controller from the set of controllers CTₓ.

After being processed by the plurality of set of coupled optical rings waveguides COₓ, the first polarization component, possibly without some of its wavelengths, is reflected by the reflector MX and propagates back through said plurality of set of coupled optical rings waveguides COₓ. In an embodiment the first polarization component propagates back transparently up to the input demultiplexer/multiplexer M1.

The second polarization component propagates on the polarization waveguide PolY1 through the plurality of set of coupled optical rings waveguides CO_{y}, which are adapted to be tuned on specific wavelengths for extracting those specific wavelengths and forwarding them on the polarization waveguide PolY2 or to let pass the second polarization component. The tuning on the specific wavelengths of the plurality of set of coupled optical rings waveguides CO_{y} is achieved individually by each controller from the set of controllers CT_{y}.

After being processed by the plurality of set of coupled optical rings waveguides CO_{y}, the second polarization component, possibly without some its wavelengths, is reflected by the reflector MY and propagates back through said plurality of set of coupled optical rings waveguides CO_{y}. In an embodiment the second polarization component propagates back transparently up to the input demultiplexer/multiplexer M1.

The input demultiplexer/multiplexer DMI combines the back propagated first polarization component and the second polarization component into a resulting plurality of wavelengths comprising the two polarization components, and output the resulting plurality of wavelengths on the output port P2. Depending on how the pluralities of set of coupled optical rings waveguides COₓ and CO_{y} are configured, the resulting plurality of wavelengths does not comprise all the wavelengths that were initially received by the input port P1.

Through the polarization waveguide PolX2, the drop demultiplexer/multiplexer DMO is provided with the wavelengths extracted/dropped by the plurality of set of coupled optical rings waveguide COₓ. Through the polarization waveguide PolY2, the drop demultiplexer/multiplexer DMO is provided with the wavelengths extracted/dropped by the plurality of set of coupled optical rings waveguide CO_{y}. The drop demultiplexer/multiplexer DMO multiplexes the extracted/dropped wavelengths belonging to two different polarization into a resulting dropped plurality of wavelengths that comprises said two different polarization. The resulting dropped plurality of wavelengths is then outputted through the drop port DP.

The figure FIG. **15** depicts a possible layout of the integrated wavelength manager SDB. The integrated wavelength manager SDB can advantageously be integrated with a low footprint and provides then a compact solution for managing wavelengths. The integrated wavelength manager SDB offers a practical design to be implemented in a single chip, by using for example silicon photonics technologies, such as silicon on insulator technique applied to integrated optical devices. The number of wavelengths that can be managed depends on the number of cascaded opposite response tunable filters such as the set of coupled optical rings waveguides. Adding supplementary filters is easily achievable within the low footprint of the integrated wavelength manager SDB. Moreover when the optical node that comprises the integrated wavelength manager SDB is not the destination of packets comprised in the plurality of wavelength, the integrated wavelength manager SDB is enabled to transparently let pass the wavelengths without adding attenuation or reducing the bandwidth of the spectrum because of filtering effects.

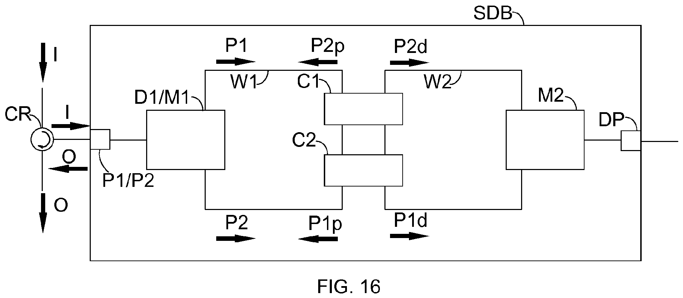

Referring to figure FIG. **16****,** a schematic block diagram of another integrated wavelength manager according to an embodiment of the invention is depicted.

In an embodiment, the integrated wavelength manager SDB is connected to an optical circulator CR. The plurality of wavelengths enters the integrated wavelength manager SDB through the optical circulator CR as depicted by the arrows I. The plurality of wavelengths processed by the integrated wavelength manager SDB exits through said optical circulator as depicted by the arrows O.

The integrated wavelength manager SDB comprises a demultiplexer/multiplexer D1/M1 connected to the input/output port P1/P2.

An output/input of the demultiplexer/multiplexer D1/M1 is connected to the first optical waveguide W1. Another input/output of said demultiplexer/multiplexer D1/M1 is connected to said first optical waveguide W1. Indeed the first optical waveguide W1 connects two input/output of the demultiplexer/multiplexer D1/M1.

The first tunable blocker C1 and the second tunable blocker C2 are cascaded, each connecting the first optical waveguide W1 and the second optical waveguide W2.

The second optical waveguide W2 is connected to an input from the second multiplexer M2 and to another input from the second multiplexer M2.

The demultiplexer/multiplexer D1/M1 demultiplexes the plurality of wavelengths received at the input/output port P1/P2 into a first component P1 and a second component P2.

The first component P1 propagates over the first optical waveguide W1 in the direction depicted by the arrow P1, and up to the first tunable blocker C1.

The first component P1 is processed by said first tunable blocker C1. Either it is let pass transparently or a selected wavelength is extracted from said first component P1.

The first component P1 is then processed by the second tunable blocker C2. Either it is let pass transparently or another selected wavelength is extracted from said first component P1.

The resulting first component P1 p continues to propagate on the first optical waveguide W1 up to the demultiplexer/multiplexer D1/M1.

Simultaneously to the aforementioned processing of the first component P1, the second component P2 propagates over the first optical waveguide W1 in the direction depicted by the arrow P2, and up to the second tunable blocker C2.

The second component P2 is processed by the second tunable blocker C2. Either it is let pass transparently or a selected wavelength is extracted from said second component P2.

The second component P2 is then processed by said first tunable blocker C1. Either it is let pass transparently or another selected wavelength is extracted from said second component P2.

The resulting second component P2p continues to propagate on the first optical waveguide W1 up to the demultiplexer/multiplexer D1/M1.

The demultiplexer/multiplexer D1/M1 multiplexes the resulting components P1 p and P2p together to generate the processed plurality of wavelengths, possibly without one or two wavelengths, that exits the integrated wavelength manager SDB into the direction of arrow O.

Upon the processing of the first component P1, when the first tunable blocker C1 and the second tunable blocker C2 are configured into extract/drop mode, a selected wavelength and/or another selected wavelength P1d are transmitted on the second optical waveguide W2, in the direction of the arrow P1d.

Similarly, upon the processing of the second component P2, when the first tunable blocker C1 and the second tunable blocker C2 are configured into extract/drop mode, a selected wavelength and/or another selected wavelength P2d are transmitted on the second optical waveguide W2, in the direction of the arrow P2d, said direction being opposite of direction of the arrow P1d.

The processed wavelengths P1 d and P2d propagate on opposite directions on the second optical waveguide W2. They reach then the second multiplexer M2 which combines them into a dropped plurality of wavelengths that is provided to the drop port DP.

In an embodiment, the demultiplexer/multiplexer D1/M1 is a polarization mode demultiplexer/multiplexer, or a band demultiplexer/multiplexer, or a wavelengths demultiplexer/multiplexer, or a spatial demultiplexer/multiplexer.

It should be noted that in case the integrated wavelength manager SDB is designed to suppress or cancel wavelengths, the second multiplexer M2 and the drop port DP are not necessary.

The integrated wavelength manager SDB as depicted in figure FIG. 16 offers a practical implementation that reduces the number of required components. For example the reflective elements are not required and a single first optical waveguide W1 is used for both demultiplexed components. Integration of the integrated wavelength manager SDB is then facilitated and the costs are reduced.

The integrated wavelength manager SDB depicted in the embodiments hereinabove is particularly advantageous when used in optical packet switching networks or in optical packet bursts network. The integrated wavelength manager SDB is enabled to perform the drop function of an optical packet or to transparently let pass said optical packet without deteriorating its optical signal.

Advantageously the integrated wavelength manager SDB depicted in the embodiments hereinabove is also particularly advantageous when used in circuit switch optical network. Indeed the integrated wavelength manager SDB offers a practical implementation of a Wavelength Selective Switch (WSS), as it is enabled to route a selected wavelength either to the output port or to the drop port when it is present, or to block said selected wavelength, or to let pass transparently a circuit switched optical signal. In an example, the integrated wavelength manager SDB depicted in figure FIG. 12 is enabled to selectively switch three different wavelengths thanks to the three tunable blocker C1, C2, C3.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An integrated wavelength manager (SDB) for managing a plurality of wavelengths from an optical signal, said integrated wavelength manager (SDB) comprising:
- an input port (P1) for receiving the plurality of wavelengths,
- an output port (P2),
- a first optical waveguide (W1) connected to the input port (P1), and connected to the output port (P2), the plurality of wavelengths propagating along said first optical waveguide (W1),
- a second optical waveguide (W2),
- a first tunable blocker connected (C1) to the first optical waveguide (W1) and to the second optical waveguide (W2), the first tunable blocker (C1) being an opposite response tunable filter (F1; F2), said first tunable blocker (C1) being adapted:
o to tune on a first selected wavelength (S1) of the plurality of wavelengths, and to extract said first selected wavelength (S1) from the first optical waveguide (W1) and to transmit said first selected wavelength (S1) on the second optical waveguide (W2), or
o to let pass the plurality of wavelengths,
- the integrated wavelength manager (SDB) being adapted:
o to output on the output port (P2) the processed plurality of wavelengths without the first selected wavelength (S1) when said first tunable blocker (C1) is tuned on said first selected wavelength (S1),
o to output on the output port (P2) the processed plurality of wavelengths when the first tunable blocker (C1) lets pass said processed plurality of wavelengths.

2. An integrated wavelength manager (SDB) according to claim 1, wherein said integrated wavelength manager (SDB) further comprises a drop port (DP) connected at an extremity of the second optical waveguide (W2), said drop port outputting the first selected wavelength (S1) when the first tunable blocker (C1) is tuned on said first selected wavelength (S1).

3. An integrated wavelength manager (SDB) according to claim 1 or 2, wherein said integrated wavelength manager (SDB) further comprises an optical reflector (M) at an extremity of the first optical waveguide (W1), the input port (P1) being connected at another extremity of said first optical waveguide (W1), the input port (P1) and the output port (P2) being the same port, the optical reflector (M) reflecting the processed plurality of wavelengths, for outputting it on the output port (P2).

4. An integrated wavelength manager (SDB) according to any of the claims 1 to 3, wherein the first tunable blocker (C1) comprises a set of coupled rings optical waveguides (CO1; CO2; CO3; CO4) in-between said first optical waveguide (W1) and said second optical waveguide (W2), said set of coupled rings optical waveguides (CO1; CO2; CO3; CO4) being the opposite response tunable filter.

5. An integrated wavelength manager (SDB) according to claim 4, wherein the first tunable blocker (C1) lets pass the plurality of wavelengths when the set of coupled rings optical waveguides is tuned on a second selected wavelength (S2; S3; S4) not comprised in said plurality of wavelengths, the first tunable blocker (C1) further comprising a first tuning controller (CT) for controlling the tuning of the set of coupled rings optical waveguides (CO1; CO2; CO3; CO4), said first tuning controller (CT) controlling the heat of the set of coupled rings optical waveguides (CO1; CO2; CO3; CO4) for tuning said set of coupled rings optical waveguides or said first tuning controller (CT) controlling a P-N junction from the set of coupled rings optical waveguides (CO1; CO2; CO3; CO4) for tuning said set of coupled rings optical waveguides.

6. An integrated wavelength manager (SDB) according to claim 4, wherein the first tunable blocker (C1) is further adapted:
- to tune a first subset of coupled rings optical waveguides (C01) from the set of coupled rings optical waveguides (CO1; CO2; CO3; CO4),
- to tune a second subset of coupled rings optical waveguides (CO2) from the set of coupled rings optical waveguides (CO1; CO2; CO3; CO4), said second subset of coupled rings optical waveguides (CO2) being different from the first subset of coupled rings optical waveguides (CO1),
- to extract said first selected wavelength (S1) from the first optical waveguide (W1) and to transmit said first selected wavelength (S1) on the second optical waveguide (W2), when the first subset of coupled rings optical waveguides (CO1) and the second subset of coupled rings optical waveguides (CO2) are tuned on the first selected wavelength (S1),
- to let pass the plurality of wavelengths when the first subset of coupled rings optical waveguides (CO1) is tuned differently than the second subset of coupled rings optical waveguides (CO2).

7. An integrated wavelength manager (SDB) according to claim 6, wherein the first tunable blocker (C1) further comprises a first tuning controller (CTH) for controlling the heat or a P-N junction of the first subset of coupled rings optical waveguides (CO1) for tuning of said first subset of coupled rings optical waveguides (CO1) and a second tuning controller (CTL) for controlling the heat or a P-N junction of second subset of coupled rings optical waveguides (CO2) for tuning of said second subset of coupled rings optical waveguides (CO2).

8. An integrated wavelength manager (SDB) according to any of the claims 1 to 7, wherein said integrated wavelength manager (SDB) further comprises a second tunable blocker (C2) connected to the first optical waveguide (W1) and to the second optical waveguide (W2), said second tunable blocker (C2) being an opposite response tunable filter, said second tunable blocker (C2) being adapted:
- to tune on a fifth selected wavelength of the plurality of wavelengths, and to extract said fifth selected wavelength from the first optical waveguide (W1) and to transmit said fifth selected wavelength on the second optical waveguide (W2), or
- to let pass the plurality of wavelengths,
the integrated wavelength manager (SDB) being adapted to:
- output on the output port the processed plurality of wavelengths without the fifth selected wavelength when the second tunable blocker (C2) is tuned on said fifth selected wavelength, and to,
- output on the output port the processed plurality of wavelengths when the second tunable blocker (C2) lets pass said processed plurality of wavelengths.

9. An integrated wavelength manager (SDB) according to any of the claims 1 to 7, wherein said integrated wavelength manager (SDB) further comprises:
- a demultiplexer (D1) in-between the first optical waveguide (W1) and the input port (P1), the input port (P1) being connected to an input from the demultiplexer (D1) and the first optical waveguide (W1) being connected to an output from the demultiplexer (D1).

10. An integrated wavelength manager (SDB) according to claim 9, further comprising a multiplexer (M2) comprising an input connected to the second optical waveguide (W2).

11. An integrated wavelength manager (SDB) according to any of the claims 9 to 10, wherein the demultiplexer (D1) is a polarization mode demultiplexer and the multiplexer (M2) is a polarization mode multiplexer, the first optical waveguide (W1) and the second optical waveguide (W2) being adapted to convey a first polarization mode.

12. An integrated wavelength manager (SDB) according to any of the claims 9 to 11, wherein the demultiplexer (D1) is a band demultiplexer for dividing a spectrum into sub-bands of spectrum and the multiplexer (M2) is a band multiplexer for joining sub-bands of the spectrum into the spectrum, the first optical waveguide (W1) and the second optical waveguide (W2) being adapted to convey a first set of the sub-bands of the spectrum.

13. An integrated wavelength manager (SDB) according to any of the claims 9 to 12, wherein the demultiplexer (D1) is a spatial mode demultiplexer and the multiplexer (M2) is a spatial mode multiplexer, the first optical waveguide (W1) and the second optical waveguide (W2) being adapted to convey a first spatial mode.

14. An integrated wavelength manager (SDB) according to any of the claims 9 to 13, wherein the first optical waveguide (W1) is further connected to an input from the demultiplexer (D1), said demultiplexer (D1) being also adapted to multiplex optical signals.

15. An integrated wavelength manager (SDB) according to claims 10 and 14, wherein the multiplexer (M2) is connected in-between the second optical waveguide (W2) and the drop port (DP), another input from said multiplexer (M2) being connected to another extremity of the second optical waveguide (W2).

16. An integrated wavelength manager (SDB) according to any of the preceding claims, wherein the tuning duration of the tuning of the first tunable blocker (C1) on the first selected wavelength (S1) is shorter than the duration of a time slot from an optical packet switching network.

17. An optical node from an optical packet switching network comprising:
- an integrated wavelength manager (SDB) according to any of the claims 1 to 16,
- an input port for receiving a wavelength division multiplexed optical signal, said input port being connected to the input port from the integrated wavelength manager (SDB),
an output port connected to the output port from the integrated wavelength manager (SDB).
